# EUROPÄISCHE PATENTSCHRIFT

(11) **EP 2 884 562 B1**
(45) Veröffentlichungstag und Bekanntmachung des Hinweises auf die Patenterteilung: **20.07.2016**
(21) Anmeldenummer: 13196706.9
(22) Anmeldetag: 11.12.2013
(51) Int. Cl.: H01M 2/12, H01M 2/14, H01M 2/18, H01M 4/14, H01M 10/06

(54) **Separator**
Separator
Séparateur

(43) Veröffentlichungstag der Anmeldung: 17.06.2015
(73) Patentinhaber: HOPPECKE Batterien GmbH & Co. KG, 59929 Brilon (DE)
(72) Erfinder: Kesper, Heinrich, 34508 Willingen (DE)
(74) Vertreter: Stenger Watzke Ring

(56) Entgegenhaltungen:
- WO-A1-2013/180198
- JP-A- 2002 324 571
- US-A- 2 570 677
- US-A- 5 455 125
- US-A1- 2012 077 075

## Beschreibung

Die Erfindung betrifft einen Separator für eine Elektrodenplatte einer plattenförmigen Elektrode einer Batterie, insbesondere einer Blei-Säure-Batterie, mit einer einen Aufnahmeraum für die Elektrodenplatte bereitstellenden Separatortasche, die zwei aufeinander aufliegende Separatorblätter aufweist, die entlang ihrer jeweiligen Längsseiten sowie ihrer oberen Stirnseiten miteinander verschweißt sind, wobei die die oberen Stirnseiten miteinander verbindende Schweißnaht eine Unterbrechung aufweist, die eine Ausnehmung für den Durchtritt einer an der oberen Randkante der Elektrodenplatte angeordneten Stromabnehmerfahne bildet.

Wieder aufladbare Batterien im Allgemeinen sowie Blei-Säure-Batterien im Speziellen sind aus dem Stand der Technik an sich gut bekannt, weshalb es eines gesonderten druckschriftlichen Nachweises an dieser Stelle nicht bedarf.

Eine gattungsgemäße Batterie verfügt typischerweise über ein Batteriegehäuse, in dem Elektroden angeordnet sind, die im bestimmungsgemäßen Verwendungszustand der Batterie von einem zumeist flüssigen Elektrolyt umgeben sind. Gängig ist die Ausgestaltung plattenförmiger Elektroden. Dabei verfügen die negativen Elektroden in aller Regel über eine Elektrodenplatte, die nach Art eines Gitters ausgebildet ist, wobei die Gittermaschen mit einer aktiven Masse ausgefüllt sind. Positive Elektroden verfügen typischerweise über eine Mehrzahl von an einer gemeinsamen Brücke angeordneten Seelen, wobei jede Seele innerhalb einer mit aktiver Masse befüllten Röhre einer Rohrtasche angeordnet ist.

Die Elektroden sind benachbart innerhalb des Batteriegehäuses angeordnete, wobei sich negative und positive Elektroden einander abwechseln. Zur Kurzschlussvermeidung ist jeweils zwischen einer negativen Elektrode und einer positiven Elektrode ein Separator angeordnet, der die beiden Elektroden elektrisch voneinander entkoppelt.

Es sind aus dem Stand der Technik unterschiedliche Separatorausgestaltungen bekannt. Eine typische Bauform ist die Ausgestaltung des Separators als Separatortasche. Diese stellt einen Aufnahmeraum für die Elektrodenplatte der negativen Elektrode bereit. Im endmontierten Zustand umhüllt die Separatortasche die Elektrodenplatte der negativen Elektrode, nimmt sie mithin nach Art einer Verpackung auf.

Die Separatortasche ist aus zwei einzelnen Separatorblättern gebildet, die aufeinander aufliegen. Entlang ihrer Längsseiten sind die Separatorblätter miteinander verbunden, vorzugsweise verschweißt. In aller Regel ist die Separatortasche entlang ihrer unteren Randkante verschlossen ausgebildet, wohingegen die obere Randkante zwecks Bestückung mit einer Elektrodenplatte offen ausgebildet ist.

Im bestimmungsgemäßen Verwendungsfall einer Batterie kommt es zu einer nicht zu vermeidenden Ablagerung von aus der aktiven Masse stammenden und im Elektrolyt befindlichen Teilchen an der Elektrodenplatte der negativen Elektrode. Diese Teilchen sammeln sich aufgrund der oberseitig offenen Separatortasche an der oberen Randkante der Elektrodenplatte an. Auch bei einer bestimmungsgemäßen Batterieverwendung können diese sich an der oberen Randkante der Elektrodenplatte der negativen Elektrode ansammelnden Teilchen eine Kurzschlussbrücke zu einer benachbarten positiven Elektrode ausbilden. Dieses Phänomen wird auch als "mossing" bezeichnet.

Um die zur Ausbildung einer Kurzschlussbrücke führende Ansammlung von elektrisch leitenden Partikeln an der Elektrodenplatte der negativen Elektrode zu vermeiden, ist vorgeschlagen worden, die Separatortasche der negativen Elektrode auch an ihrer oberen Randkante zu verschließen. Eine solche Ausgestaltung ist beispielsweise aus der US 2,570,677 und der US 4,680,242 bekannt.

Problematisch bei einer allseits verschlossenen Separatortasche ist, dass es infolge von bei einer bestimmungsgemäßen Verwendung freiwerdender Gase zu einem Aufblähen der Separatortasche kommen kann. Dies kann in nachteiliger Weise einen ordnungsgemäßen Betrieb der Batterie stören. Durch die Ansammlung von freiwerdendem Gas innerhalb der Separatortasche kommt es aber vor allem zu einer Art Gasbelegung der Elektrode, so dass Elektrolyt die Elektrode nicht mehr oder nur noch teilweise erreichen kann. Im Ergebnis kann dies bis zu einem Komplettausfall der Elektrode führen.
Um diesem Problem zu begegnen, ist mit der US 4,680,242 vorgeschlagen worden, die für den Durchgriff einer an der oberen Randkante der Elektrodenplatte angeordneten Stromabnehmerfahne vorgesehene Ausnehmung in der Separatortasche etwas größer als die Stromabnehmerfahne auszubilden. Im Betrieb freiwerdendes Gas kann so über die für den Durchtritt der Stromabnehmerfahne in der Separatortasche ausgebildete Ausnehmung entweichen.
Von Nachteil der aus der US 4,680,242 vorbekannten Konstruktion ist, dass die Ausnehmung für die Stromabnehmerfahne zum Zwecke der Entgasung so groß auszubilden ist, dass Schwebeteilchen aus dem Elektrolyten in den Aufnahmeraum der Separatortasche einströmen und sich insbesondere im Bereich der Stromabnehmerfahne an der Elektrodenplatte ablagern können, so dass es trotz der ansonsten verschlossenen Ausführung der Separatortasche zu ungewollten Verkrustungen der Elektrode kommen kann. Mit vorangeschrittener Teilchablagerung verschließt sich die Ausnehmung für die Stromabnehmerfahne zumindest teilweise, so dass eine Entgasung nicht mehr in einem hinreichenden Umfang stattfinden kann, womit die Gefahr eines Batterieausfalls durch Aufbläherscheinungen der Separatortasche wächst.

Darüber hinaus wird in der Druckschrift US 5,455,125 eine Separatortasche für eine Elektrodenplatte offenbart welche an der Oberseite eine Schweißnaht aufweist, welche zur Ausbildung einer Entgasungsöffnung in einem zu einer Längsseite benachbarten Randabschnitt unterbrochen ausgebildet ist.

Es ist ausgehend vom Vorbeschriebenen die **Aufgabe** der Erfindung, einen Separator vorzuschlagen, der das Ansammeln von elektrisch leitenden Teilchen an der Elektrodenplatte bei gleichzeitiger Vermeidung von Bläheffekten minimieren lässt.

Zur Lösung dieser Aufgabe wird mit der Erfindung ein Separator der eingangs genannten Art vorgeschlagen, der sich dadurch auszeichnet, dass die Schweißnaht zur Ausbildung einer Entgasungsöffnung in einem zu einer Längsseite benachbarten Randabschnitt unterbrochen ausgebildet ist, wobei eine zur Schweißnaht beabstandet ausgebildete zweite Schweißnaht vorgesehen ist, die der Entgasungsöffnung der ersten Schweißnaht direkt gegenüberliegend positioniert ist.

Nach der erfindungsgemäßen Ausgestaltung verfügt die Separatortasche über eine Entgasungsöffnung. Zu diesem Zweck ist die entlang der oberen Stirnseiten der Separatorblätter ausgebildete Schweißnaht unterbrochen ausgebildet, und zwar in einem zu einer Längsseite benachbarten Randabschnitt. Im bestimmungsgemäßen Anwendungsfall entstehendes Gas kann so über die für den Durchtritt einer Stromabnehmerfahne vorgesehene Ausnehmung einerseits als auch über die hierzu zusätzlich vorgesehene Entgasungsöffnung andererseits entweichen.

Erfindungsgemäß ist desweiteren eine zweite Schweißnaht vorgesehen. Diese ist beabstandet zur ersten Schweißnaht ausgebildet. Sie dient somit als Abstandshalter für eine im bestimmungsgemäßen Verwendungsfall von der Separatortasche aufgenommene Elektrodenplatte. Mittels der zweiten Schweißnaht wird mithin eine zur ersten Schweißnaht beabstandete Anordnung der Elektrodenplatte innerhalb der Separatortasche sichergestellt. Der Abstand zwischen erster und zweiter Schweißnaht beträgt beispielsweise 1,5 cm.

Die zweite Schweißnaht ist der in der ersten Schweißnaht ausgebildeten Entgasungsöffnung direkt gegenüberliegend positioniert. Sie stellt mithin eine Strömungsbarriere dar.

Mit der erfindungsgemäßen Ausgestaltung werden im Wesentlichen zwei vorteilhafte Effekte erzielt. Es ist zum einen eine Entgasung gestattet. Diese findet sowohl über die für die Stromabnehmerfahne vorgesehene Ausnehmung als auch über die zusätzliche Entgasungsöffnung statt. Zum anderen ist die Ausbildung einer Kurzschlussbrücke durch sich an der Elektrodenplatte der negativen Elektrode ansammelnde Partikel sicher vermieden. So ist die Separatortasche bis auf die für einen Durchtritt der Stromabnehmerfahne vorgesehene Ausnehmung und die Entgasungsöffnung oberseitig geschlossen ausgebildet. Die Anlagerung etwaiger Partikel ist so im Unterschied zu einer oberseitig vollständig offen ausgebildeten Separatortasche erschwert. Die Positionierung der zweiten Schweißnaht in Relation zur Entgasungsöffnung bildet eine Strömungsbarriere aus. Es ergibt sich eine Labyrinthführung, so dass über die Entgasungsöffnung unter Umständen in die Separatortasche einwandernde Partikel nicht direkt auf der Elektrodenplatte sondern auf der zweiten Schweißnaht zu liegen kommen.

Ein elektrischer Kontakt mit der Elektrodenplatte wird folglich vermieden, so dass Ankrustungen unterbleiben. Im Entgasungsfall können dererlei locker auf der zweiten Schweißnaht aufliegende Partikel dann zumindest teilweise über die Entgasungsöffnung aus der Separatortasche wieder ausgetrieben werden. Die beabstandete Anordnung der zweiten Schweißnaht zur ersten Schweißnaht erbringt einen weiteren positiven Effekt. Im bestimmungsgemäßen Verwendungsfall ist die Elektrodenplatte dank der beabstandeten Anordnung der zweiten Schweißnaht zur ersten Schweißnaht beabstandet zur oberen Randkante der Separatortasche positioniert, womit sich ein Freiraum ergibt zwischen oberer Randkante der Elektrodenplatte einerseits und der bis auf die Ausnehmung für die Stromabnehmerfahne und die Entgasungsöffnung ansonsten verschlossenen Randkante der Separatortasche andererseits. Sollte es trotz der vorbeschriebenen Labyrinthführung zu einem Eindringen von Partikeln in die Separatortasche und einem anschließenden Anhaften dieser Partikel an der Elektrodenplatte kommen, so können sich dererlei Ablagerungen zunächst in den durch die beabstandete Anordnung der Elektrodenplatte ergebenden Freiraum erstrecken. Ein ungewollter Verschluss der für die Stromabnehmerfahne vorgesehenen Ausnehmung und/oder der Entgasungsöffnung kann so vermieden werden. Damit wird die Funktionstüchtigkeit der Batterie auch dann sichergestellt, wenn Teilchen und/oder Partikel aus dem Elektrolyt die separatortaschenseitige Labyrinthführung durchwandern sollten.

Im Ergebnis wird mit der erfindungsgemäßen Ausgestaltung ein Separator vorgeschlagen, der das Anlagern von elektrisch leitenden Partikeln an der Elektrodenplatte weitestgehend verhindern hilft und dies bei gleichzeitiger Bereitstellung einer Entgasungsmöglichkeit. Die Betriebssicherheit wird zudem dadurch erhöht, dass es selbst im Falle einer ungewünschten Partikelanlagerung nicht zu einem Verschluss der für eine Entgasung vorgesehenen Öffnungen kommen kann. So ist die als Abstandshalter dienende zweite Schweißnaht der Entgasungsöffnung direkt gegenüberliegend ausgebildet, womit sich zumindest der Entgasungsöffnung direkt gegenüberliegend keine Partikel an der Elektrodenplatte ansammeln können.

Es ist gemäß einem weiteren Merkmal der Erfindung vorgesehen, dass die erste Schweißnaht zur Ausbildung einer weiteren Entgasungsöffnung in einem zur anderen Längsseite benachbarten Randabschnitt unterbrochen ausgebildet ist. Demgemäß verfügt die erfindungsgemäße Separatortasche über eine erste und eine zweite Entgasungsöffnung. Diese sind jeweils in einem zur jeweiligen Längsseite benachbarten Randabschnitt ausgebildet.

Die Ausbildung zweier Entgasungsöffnungen macht es möglich, die für einen Durchgriff der Stromabnehmerfahne vorgesehene Ausnehmung in der oberen Randkante der Separatortasche in ihrer Größenausgestaltung zu minimieren. Bevorzugterweise liegt das Material der Separatortasche möglichst dicht an der Stromabnehmerfahne an, so dass das ungewollte Eindringen von Partikeln in das Innere der Separatortasche weitestgehend unterbunden ist. Etwaige sich im Öffnungsbereich auf der Separatortasche ansammelnde Partikel werden im Entgasungsfall mitgerissen, so dass ungewollte "mossing"-Effekte direkt an der Stromabnehmerfahne minimiert sind, und zwar soweit, dass es über die Lebensdauer der Batterie nicht zu einer Ausgestaltung einer Kurzschlussbrücke zur benachbarten positiven Elektrode kommt.

Der zweiten Entgasungsöffnung ist in Entgasungsrichtung zur Ausbildung einer Labyrinthführung eine Strömungsbarriere vorgeschaltet. Zu diesem Zweck ist eine dritte Schweißnaht vorgesehen, die der weiteren Entgasungsöffnung direkt gegenüberliegend positioniert ist. Auch diese dritte Schweißnaht ist zur ersten Schweißnaht beabstandet ausgebildet und wirkt mithin wie auch schon die zweite Schweißnaht als Abstandshalter für eine in die Separatortasche eingebrachte Elektrodenplatte.

Es ist bevorzugt, die zweite und die dritte Schweißnaht gleich beabstandet zur ersten Schweißnaht auszubilden. Der Abstand beträgt 0,5 cm bis 2,5 cm, vorzugsweise 1,0 cm bis 2,0 cm, noch mehr bevorzugt 1,5 cm zu den oberen Stirnseiten der Separatorblätter, das heißt der oberen Randkante der Separatortasche. Der Abstand von erster Schweißnaht zur zweiten und dritten Schweißnaht bestimmt den im bestimmungsgemäßen Verwendungsfall sich zwischen oberer Randkante der Elektrodenplatte einerseits und der oberen Randkante der Separatortasche andererseits ergebenden Freiraum, in den sich ungewollt an der Elektrodenplatte ansammelnde Partikel "einwachsen" können.

Die zweite und die dritte Schweißnaht verfügen über eine Erstreckung, die der Erstreckung der jeweils zugehörigen Entgasungsöffnung im Wesentlichen entspricht. Es ist so erreicht, dass derjenige Teil der oberen Randkante der Elektrodenplatte, der der jeweiligen Entgasungsöffnung direkt gegenüberliegt, nicht freiliegt, so dass einem Verschluss der Entgasungsöffnungen durch an der Elektrodenplatte der jeweiligen Entgasungsöffnung direkt gegenüberliegende Partikelansammlungen entgegengewirkt ist.

Die Separatorblätter der Separatortasche können gemäß einer ersten Alternative entlang ihrer der ersten Schweißnaht gegenüberliegenden unteren Stirnseite miteinander verbunden, vorzugsweise verschweißt sein. Demnach ist die Separatortasche unterseitig verschlossen ausgebildet. Die hat den Vorteil, dass sich aus dem Gitter der Elektrodenplatte unter Umständen auslösende Partikel der aktiven Masse in der Separatortasche verbleiben und nicht in den Elektrolyt einwandern können. Die unterseitig verschlossen ausgebildete Separatortasche macht es indes erforderlich, die Separatortasche nach einem Einbringen der Elektrodenplatte zum Zwecke des unterseitigen Verschließens einem weiteren Herstellungsschritt zu unterziehen.

Einer solchen ergänzenden Handhabung bedarf es nicht, wenn die Separatortasche gemäß einer alternativen Ausgestaltung entlang ihrer der ersten Schweißnaht gegenüberliegenden unteren Randkante offen ausgebildet ist. In diesem Fall kann die fertiggestellte Separatortasche mit der Elektrodenplatte bestückt und alsdann als fertige Elektrode in ein Batteriegehäuse eingesetzt werden.

Verfahrensseitig wird zur Lösung der vorstehenden Aufgabe ferner vorgeschlagen ein Verfahren zur Herstellung einer Separatortasche für eine Elektrodenplatte einer plattenförmigen Elektrode, bei dem zwei jeweils endlos ausgebildete Separatorblätter aufeinandergelegt und entlang ihrer Längsseiten miteinander verschweißt werden, bei dem in äquidistanten Abständen eine Ablängung der längsseitig verschweißten Separatorblätter erfolgt und bei dem die abgelängten Separatorblätter entlang ihrer ersten Stirnseiten unter Ausbildung einer Schweißnaht miteinander verschweißt werden, wobei die Schweißnaht mit einer Ausnehmung für den Durchtritt einer an der Elektrodenplatte angeordneten Stromabnehmerfahne ausgebildet wird.

Verfahrensseitig ist vorgesehen, die Separatortaschen aus Separatorblättern zu bilden. Es kommen dabei endlos ausgebildete Separatorblätter zum Einsatz, die beispielsweise von einer Endlosrolle abgewickelt werden. Die beiden endlos ausgebildeten Separatorblätter werden aufeinandergelegt und entlang ihrer Längsseiten, das heißt in Endlosrichtung miteinander verschweißt. Es entsteht so ein Endlosschlauch.

Der Endlosschlauch wird in einem nächsten Verfahrensschritt abgelängt. Es entstehen so die Separatortaschen in ihren geometrischen Abmessungen. Die Ablängung der längsverschweißten Separatorblätter erfolgt in äquidistanten Abständen, so dass in ihren geometrischen Abmessungen gleichgroße Separatortaschen entstehen.

In einem letzten Verfahrensschritt erfolgt zur endfertigen Ausbildung der Separatortaschen ein Verschweißen der Stirnseiten der abgelängten Separatorblätter. Dabei wird die dabei entstehende Schweißnaht nicht über die gesamte Länge der Stirnseite durchgeführt, sondern es wird vielmehr eine Schweißnaht mit einer Ausnehmung für den Durchgriff einer an der Elektrodenplatte angeordneten Stromabnehmerfahne ausgebildet. Es entsteht so eine unterbrochene Schweißnaht, wobei die Schweißnahtunterbrechung die Ausnehmung für Stromabnehmerfahne darstellt.

Nachdem die Separatortasche in vorbeschriebener Weise ausgebildet ist, kann eine Bestückung mit einer Elektrodenplatte über die unverschlossene untere Randkante der Separatortasche erfolgen. Sollte es gewünscht sein, kann nach einem Einbringen der Elektrodenplatte in die Separatortasche ein Verschließen auch der unteren Randkante der Separatortasche stattfinden, beispielsweise durch Verschweißen.

Alternativ zur vorbeschriebenen Verfahrensdurchführung kann auch vorgesehen sein, dass die beiden endlos ausgebildeten Separatorblätter unter Zwischenordnung von in äquidistanten Abständen zueinander benachbarten Elektrodenplatten aufeinandergelegt werden. Eine solche Vorgehensweise hat den Vorteil, dass ein späteres Verschweißen der Separatorblätter zur Ausbildung der Separatortasche bei einer je späterer Separatortasche bereits zwischen die Separatorblätter eingebrachten Elektrodenplatte erfolgt, womit in einem Arbeitsschritt eine endfertige und bereits bestückte Separatortasche ausgebildet wird.

Es ist gemäß einem weiteren Merkmal der Erfindung vorgesehen, dass die Schweißnaht zur Ausbildung zweier Entgasungsöffnungen jeweils in einem zu den verschweißten Längsseiten benachbarten Randabschnitt unterbrochen ausgebildet wird. In einem Verfahrensschritt werden so zum einen die Ausnehmung für die Stromabnehmerfahne als auch zum anderen die Entgasungsöffnungen ausgebildet.

Verfahrensseitig wird zudem vorgeschlagen, dass eine zur ersten Schweißnaht beabstandet ausgebildete zweite und dritte Schweißnaht ausgebildet werden, die den beiden Entgasungsöffnungen der ersten Schweißnaht jeweils direkt gegenüberliegend positioniert werden. Diese zweite und dritte Schweißnaht bilden in Kombination mit der zugehörigen Entgasungsöffnung eine Labyrinthführung aus und dienen darüber hinaus als Abstandshalter für eine von der Separatortasche aufgenommenen Elektrodenplatte. Es stellen sich damit die schon vorstehend beschriebenen Vorteile ein.

Von besonderem Vorteil ist es, wenn die Ausbildung der Schweißnähte und/oder die Ablängung der Separatorblätter in einem Verfahrensschritt gleichzeitig durchgeführt wird. Dabei kann eine Ablängung auch mittels Durchschweißen erfolgen, so dass mittels einer Schweißvorrichtung sowohl ein Verschweißen als auch eine Ablängung in einem Arbeitsgang vorgenommen werden kann.

Weitere Merkmale und Vorteile der Erfindung ergeben sich aus der nachfolgenden Beschreibung anhand der Figuren. Dabei zeigen:
- Fig. 1: in schematischer Darstellung eine Batterie mit erfindungsgemäßen Separatoren;
- Fig. 2: in einer schematischen Seitenansicht einen Separator nach der Erfindung;
- Fig. 3: in einer schematischen Draufsicht von oben den Separator nach Fig. 2;
- Fig. 4: in einer Ausschnittsdarstellung den Separator nach Fig. 1 gemäß Schnittlinie A-A und
- Fig. 5: in einer schematischen Darstellung die erfindungsgemäße Verfahrensabwicklung.

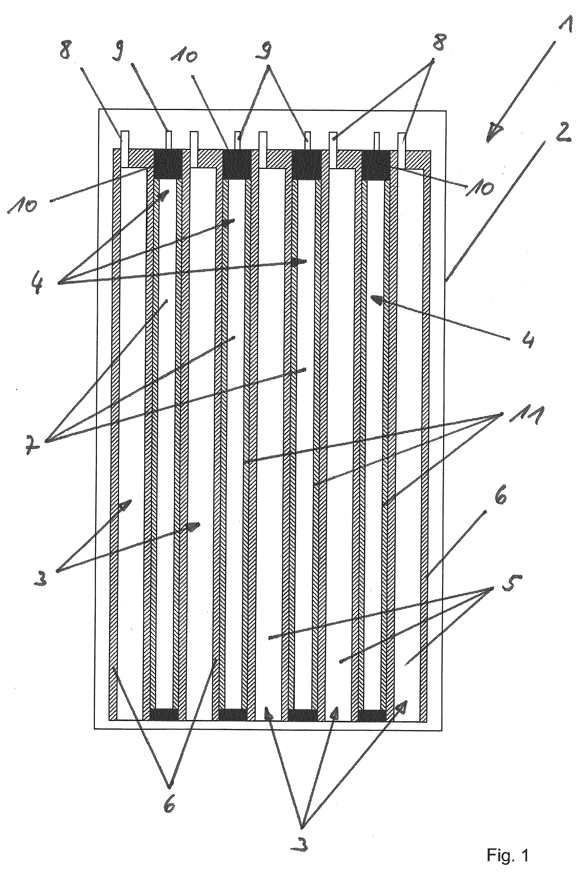

Fig. 1 zeigt in rein schematischer Darstellung eine Batterie 1. Diese verfügt in an sich bekannter Weise über ein Batteriegehäuse 2, das negative Elektroden 3 einerseits sowie positive Elektroden 4 andererseits abwechselnd aufnimmt.

Die negativen Elektroden 3 verfügen jeweils über eine Elektrodenplatte 5, die von einem Separator 6 umgeben ist.

Die positiven Elektroden 4 sind als Rohrplatten 7 ausgebildet, verfügen mithin über jeweils in Taschen einer Rohrtasche 11 angeordnete Seelen.

Die Elektroden 3, 4 verfügen jeweils an ihrer oberen Randkante über eine Stromabnehmerfahne, wobei die negativen Elektroden 3 jeweils eine Fahne 8 und die positiven Elektroden 4 jeweils eine Fahne 9 bereitstellen. Im gezeigten Ausführungsbeispiel sind die positiven Elektroden 4 mit einer Schutzkappe 10 vorzugsweise aus Kunststoff ausgerüstet. Diese Schutzkappe 10 deckt die die Seelen der positiven Elektrode 4 miteinander verbindende Leitungsbrücke ab. Für einen Durchgriff der Fahne 9 ist die Kunststoffkappe 10 mit einer entsprechenden Ausnehmung ausgerüstet.

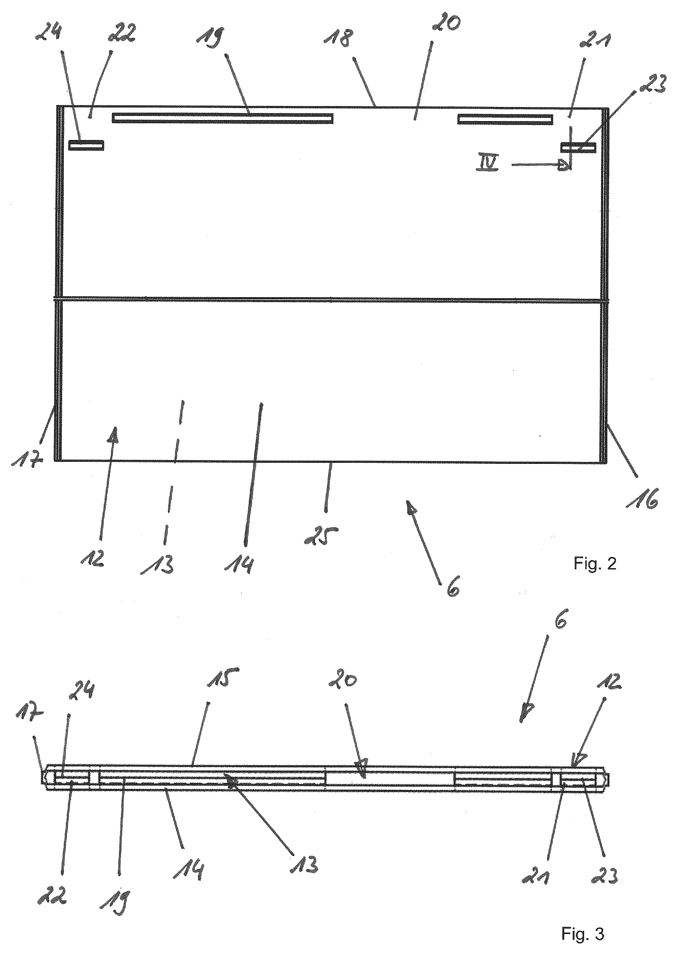

Die Separatoren 6 der negativen Elektroden 3 sind jeweils als Separatortaschen 12 ausgebildet, wie sich dies im Detail aus den Figuren 2, 3 und 4 ergibt.

Wie eine Zusammenschau der Figuren 2 und 3 erkennen lässt, ist der Separator 6 nach der Erfindung als Separatortasche 12 ausgebildet. Diese stellt einen Aufnahmeraum 13 für die im bestimmungsgemäßen Verwendungsfall vom Separator 6 aufgenommene Elektrodenplatte 5 bereit.

Die Separatortasche 12 weist zwei aufeinander aufliegende Separatorblätter 14 und 15 auf, die entlang ihrer jeweiligen Längsseiten 16 und 17 miteinander verschweißt sind. Die oberen Stirnseiten 18 der Separatorblätter 14 und 15 sind gleichfalls miteinander verschweißt, wobei die die oberen Stirnseiten 18 miteinander verbindende Schweißnaht 19 eine Unterbrechung aufweist, die eine Ausnehmung 20 für den Durchtritt einer an der oberen Randkante der Elektrodenplatte 5 angeordnete Fahne 8 bildet. Dieser Sachzusammenhang ergibt sich insbesondere aus der Darstellung nach Fig. 2.

Erfindungsgemäß ist die Schweißnaht 19 zur Ausbildung einer Entgasungsöffnung 21 in einem zu einer Längsseite 16 benachbarten Randabschnitt unterbrochen ausgebildet. Diese Entgasungsöffnung 21 dient im bestimmungsgemäßen Batterieverwendungsfall dazu, an der Elektrodenplatte 5 entstehende Gase aus der Separatortasche 12 ableiten zu können, um so ein Aufblähen der Separatortasche 12 zu vermeiden. Das Ableiten der entstehenden Gase stellt darüber hinaus insbesondere sicher, dass es nicht zu einer Gasbelegung der Elektrodenplatte kommt, so dass stets ein unbehinderter Kontakt zwischen der Elektrodenplatte und dem Elektrolyt stattfinden kann. Durch ungewollte Gasbelegung bedingte Teilausfälle der Elektrodenplatte 5 können so wirksam vermieden werden.

Es ist eine zweite Schweißnaht 23 vorgesehen, wobei diese zur ersten Schweißnaht 19 beabstandet ausgebildet und der Entgasungsöffnung 21 direkt gegenüberliegend positioniert ist. Für aus der Separatortasche 12 ausströmendes Gas wird so eine Labyrinthführung bereitgestellt.

Die Schweißnaht 23 dient dank ihrer beabstandeten Anordnung zur ersten Schweißnaht 19 zudem als Abstandshalter für eine von der Separatortasche 12 aufgenommenen Elektrodenplatten 5. Im endmontierten Zustand ist so ein Freiraum zwischen der oberen Randkante einer Elektrodenplatte 5 einerseits und der oberen Schweißnaht 19 der Separatortasche 12 andererseits sichergestellt.

Die gezeigte Ausführungsform verfügt über eine weitere Entgasungsöffnung 22. Diese ist als Unterbrechung der ersten Schweißnaht 19 ausgebildet, und zwar in einem zur anderen Längsseite 17 benachbarten Randabschnitt. Der Entgasungsöffnung 22 gegenüberliegend ist eine dritte Schweißnaht 24 vorgesehen, die der zweiten Entgasungsöffnung 22 direkt gegenüberliegend positioniert ist.

Die Schweißnähte 23 und 24 sind gleich beabstandet zur ersten Schweißnaht 19 ausgebildet, wobei der Abstand im gezeigten Ausführungsbeispiel 1,5 cm beträgt.

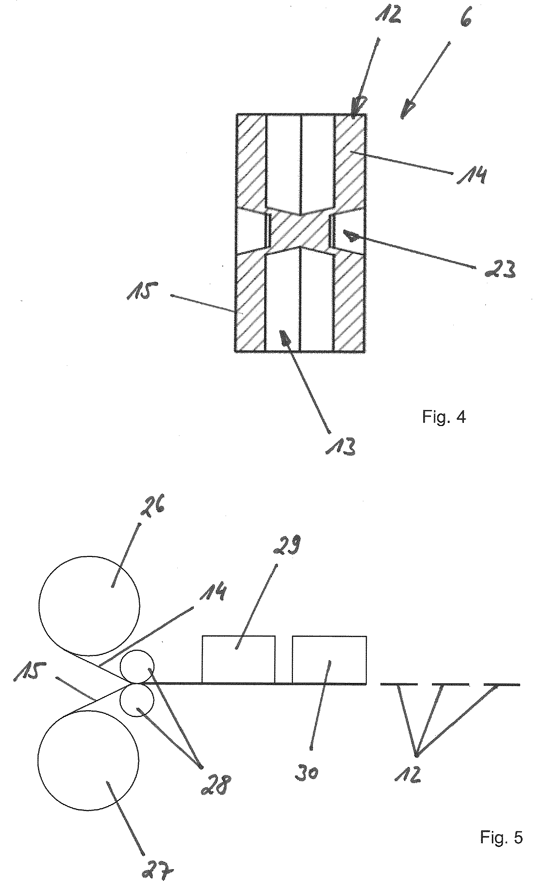

Die Detailansicht nach Fig. 4 lässt in einer Schnittdarstellung die zweite Schweißnaht 23 in ihrer Ausgestaltung erkennen.

Fig. 4 zeigt in schematischer Darstellung eine Verfahrensdurchführung nach der Erfindung.

Zur Herstellung der Separatortasche 12 dienen endlos ausgebildete Separatorblätter 14 und 15, die von entsprechenden Rollen 26 und 27 abgewickelt und über entsprechende Umlenkrollen 28 geführt sind. Die beiden Separatorblätter 14 und 15 werden mittels der Umlenkrollen 28 aufeinander gelegt. Es findet alsdann in einer ersten Schweißstation 29 ein Verschweißen der Separatorblätter 14 und 15 entlang ihrer Längsseiten 16 und 17, das heißt in Endlosrichtung statt.

In einer zweiten Schweißstation 30 erfolgt bei einer gleichzeitigen Ablängung die Ausbildung der quer zu den Längsseiten 16 und 17 verlaufenden Schweißnähte 19, 23 und 24. Dabei erfolgt die Ablängung bevorzugterweise mittels Durchschweißen, so dass keine separaten Trenneinrichtungen zur Ablängung erforderlich sind.

Im Ergebnis der Verfahrensdurchführung steht eine Separatortasche 12, die wie in den Figuren 2 bis 4 gezeigt ausgebildet ist. Eine Bestückung der Separatortasche 12 mit einer Elektrodenplatte 5 kann über die untere, unverschlossene Randkante 25 der Separatortasche 12 erfolgen.

**Bezugszeichenliste**

| | | | |
|---|---|---|---|
| 1 | Batterie | 16 | Längsseite |
| 2 | Batteriegehäuse | 17 | Längsseite |
| 3 | negative Elektrode | 18 | obere Stirnseite |
| 4 | positive Elektrode | 19 | erste Schweißnaht |
| 5 | negative Elektrodenplatte | 20 | Ausnehmung |
| 6 | Separator | 21 | Entgasungsöffnung |
| 7 | positive Elektrodenplatte | 22 | Entgasungsöffnung |
| 8 | Fahne (negativ) | 23 | zweite Schweißnaht |
| 9 | Fahne (positiv) | 24 | dritte Schweißnaht |
| 10 | Schutzkappe | 25 | untere Stirnseite |
| 11 | Rohrtasche | 26 | Rolle |
| 12 | Separatortasche | 27 | Rolle |
| 13 | Aufnahmeraum | 28 | Umlenkrolle |
| 14 | Separatorblatt | 29 | erste Schweißstation |
| 15 | Separatorblatt | 30 | zweite Schweißstation |

## Patentansprüche

1. Separator für eine Elektrodenplatte (5) einer plattenförmigen Elektrode (3) einer Batterie (1), insbesondere einer Blei-Säure-Batterie, mit einer einen Aufnahmeraum (13) für die Elektrodenplatte (5) bereitstellenden Separatortasche (12), die zwei aufeinander aufliegende Separatorblätter (14, 15) aufweist, die entlang ihrer jeweiligen Längsseiten (16, 17) sowie ihrer oberen Stirnseiten (18) miteinander verschweißt sind, wobei die die oberen Stirnseiten (18) miteinander verbindende Schweißnaht (19) eine Unterbrechung aufweist, die eine Ausnehmung (20) für den Durchtritt einer an der oberen Randkante der Elektrodenplatte (5) angeordneten Stromabnehmerfahne (8) bildet,
wobei
die Schweißnaht (19) zur Ausbildung einer Entgasungsöffnung (21) in einem zu einer Längsseite (16) benachbarten Randabschnitt unterbrochen ausgebildet ist, **dadurch gekennzeichnet, dass** eine zur Schweißnaht (19) beabstandet ausgebildete zweite Schweißnaht (23) vorgesehen ist, die der Entgasungsöffnung (21) der ersten Schweißnaht (19) direkt gegenüberliegend positioniert ist.

2. Separator nach Anspruch 1, **dadurch gekennzeichnet, dass** die erste Schweißnaht (19) zur Ausbildung einer weiteren Entgasungsöffnung (22) in einem zur anderen Längsseite (17) benachbarten Randabschnitt unterbrochen ausgebildet ist und dass eine zur ersten Schweißnaht (19) beabstandet ausgebildete dritte Schweißnaht (24) vorgesehen ist, die der weiteren Entgasungsöffnung (22) der ersten Schweißnaht (19) direkt gegenüberliegend positioniert ist.

3. Separator nach Anspruch 2,
**dadurch gekennzeichnet, dass** die zweite und dritte Schweißnaht (23, 24) gleich beabstandet zur ersten Schweißnaht (19) ausgebildet sind.

4. Separator nach Anspruch 2 oder 3,
**dadurch gekennzeichnet, dass** der Abstand von zweiter und dritter Schweißnaht (23, 24) zu den oberen Stirnseiten (18) der Separatorblätter (14, 15) 0,5 cm bis 2,5 cm, vorzugsweise 1,0 cm bis 2,0 cm, mehr bevorzugt 1,5 cm beträgt.

5. Separator nach einem der vorhergehenden Ansprüche 2 bis 4, **dadurch gekennzeichnet, dass** die zweite und die dritte Schweißnaht (23, 24) jeweils eine Erstreckung aufweisen, die der Erstreckung der jeweils zugehörigen Entgasungsöffnung (21, 22) im Wesentlichen entspricht.

6. Separator nach einem der vorhergehenden Ansprüche 1 bis 5
**dadurch gekennzeichnet, dass** die Separatorblätter (14, 15) der Separatortasche (6) entlang ihrer der ersten Schweißnaht (19) gegenüberliegenden unteren Stirnseiten (25) miteinander verbunden, vorzugsweise verschweißt sind.

7. Separator nach einem der vorhergehenden Ansprüche 1 bis 5,
**dadurch gekennzeichnet, dass** die Separatortasche (6) entlang ihrer der ersten Schweißnaht (19) gegenüberliegenden unteren Randkante (25) offen ausgebildet ist.

## Claims

1. A separator for an electrode plate (5) of a plate-shaped electrode (3) of a battery (1), in particular a lead-acid battery, comprising a separator pocket (12) providing a reception space (13) for the electrode plate (5), which separator pocket comprises two separator sheets (14, 15) placed one upon the other, which are welded to each other along their respective longitudinal sides (16, 17) as well as their upper front sides (18), wherein the welding seam (19) which connects the upper front sides (18) to each other comprises an interruption which forms a recess (20) for the penetration of a power collector lug (8) arranged on the upper edge of the electrode plate (5),
wherein
the welding seam (19) is interrupted in an edge section adjacent to one longitudinal side (16) for forming a degassing opening (21),
**characterized in that** a second welding seam (23) which is spaced from said welding seam (19) is provided, which second welding seam is positioned directly opposite the degassing opening (21) of the first welding seam (19).

2. A separator according to claim 1, **characterized in that** the first welding seam (19) is interrupted in an edge section adjacent to the other longitudinal side (17) for forming another degassing opening (22), and that a third welding seam (23) spaced from the first welding seam (19) is provided, which is positioned directly opposite the other degassing opening (22) of the first welding seam (19).

3. A separator according to claim 2,
**characterized in that** the second and third welding seams (23, 24) are arranged at the same distance from the first welding seam (19).

4. A separator according to claim 2 or 3,
**characterized in that** the distance of the second and third welding seam (23, 24) from the upper front sides (18) of the separator sheets (14, 15) is comprised between 0.5 cm and 2.5 cm, preferably between 1.0 cm and 2.0 cm, most preferably 1.5 cm.

5. A separator according to one of the preceding claims 2 through 4,
**characterized in that** the second and third welding seams (23, 24) respectively comprise an extension which essentially corresponds to the extension of the respectively associated degassing opening (21, 22).

6. A separator according to one of the preceding claims 1 through 5,
**characterized in that** the separator sheets (14, 15) of the separator pocket (6) are connected, preferably welded to each other along their lower front sides (25) opposite the first welding seam (19).

7. A separator according to one of the preceding claims 1 through 5,
**characterized in that** the separator pocket (6) is open along its lower edge (25) opposite the first welding seam (19).

## Revendications

1. Séparateur pour une plaque d'électrode (5) d'une électrode en forme de plaque (3) d'une batterie (1), notamment une batterie plomb-acide, comprenant une poche de séparateur (12) fournissant un espace de réception (13) pour la plaque d'électrode (5), laquelle poche de séparateur comprend deux feuilles de séparateur (14, 15), qui s'appuient l'une sur l'autre et qui sont soudées l'une à l'autre le long de leurs côtés longitudinaux respectifs (16, 17) et le long de leurs côtés frontaux supérieurs (18), le cordon de soudure (19) reliant les côtés frontaux supérieurs (18) l'un à l'autre comprenant une interruption, qui forme un évidement (20) pour la pénétration d'une cosse collectrice de courant (8) disposée sur le bord supérieur de la plaque d'électrode (5),
dans lequel
le cordon de soudure (19) est interrompu dans une partie de bord adjacente à un côté longitudinal (16) pour former un orifice de dégazage (21), **caractérisé en ce qu'**un deuxième cordon de soudure (23) espacé du cordon de soudure (19) est prévu, qui est positionné directement en face de l'orifice de dégazage (21) du premier cordon de soudure (19).

2. Séparateur selon la revendication 1, **caractérisé en ce que** le premier cordon de soudure (19) ) est interrompu dans une partie de bord adjacente à l'autre côté longitudinal (17) pour former un autre orifice de dégazage (22), et qu'un troisième cordon de soudure (24) espacé du premier cordon de soudure (19) est prévu, qui est positionné directement en face de l'autre orifice de dégazage (22) du premier cordon de soudure (19).

3. Séparateur selon la revendication 2,
**caractérisé en ce que** les deuxième et troisième cordons de soudure (23, 24) sont disposés à la même distance du premier cordon de soudure (19).

4. Séparateur selon la revendication 2 ou la revendication 3,
**caractérisé en ce que** la distance du deuxième et du troisième cordon de soudure (23, 24) par rapport aux côtés frontaux supérieurs (18) des feuilles de séparateur (14, 15) est comprise entre 0,5 cm et 2,5 cm, de préférence entre 1,0 cm et 2,0 cm, de préférence particulière 1,5 cm.

5. Séparateur selon l'une des revendications précédentes 2 à 4,
**caractérisé en ce que** les deuxième et troisième cordons de soudure (23, 24) comprennent chacun une extension qui correspond essentiellement à l'extension de l'orifice de dégazage (21, 22) respectivement associé.

6. Séparateur selon l'une des revendications précédentes 1 à 5,
**caractérisé en ce que** les feuilles de séparateur (14, 15) de la poche de séparateur (6) sont reliées l'une à l'autre, de préférence soudées l'une à l'autre, le long de leurs côtés frontaux inférieurs (25) opposés au premier cordon de soudure (19).

7. Séparateur selon l'une des revendications précédentes 1 à 5,
**caractérisé en ce que** la poche de séparateur (6) est ouverte le long de son bord inférieur (25) opposé au premier cordon de soudure (19).
